# EUROPÄISCHE PATENTSCHRIFT

(11) **EP 0 476 284 B1**
(45) Veröffentlichungstag und Bekanntmachung des Hinweises auf die Patenterteilung: **23.03.1994**
(21) Anmeldenummer: 91112987.2
(22) Anmeldetag: 02.08.1991
(51) Int. Cl.: F16B 5/12

(54) **Halteklammer zur Befestigung von Bauteilen an Trägerplatten**
Retaining clamp for fixing assembly elements to plates
Pince de retenue pour la fixation d'éléments de montage sur des plaques support

(30) Priorität: 25.08.1990 DE 4026922
(43) Veröffentlichungstag der Anmeldung: 25.03.1992
(73) Patentinhaber: A. Raymond & Cie, 38028 Grenoble (FR)
(72) Erfinder: Hullmann, Klaus, D-79540 Lörrach (DE); Klamm, Ingo, D-79576 Weil/Rh. (DE)
(74) Vertreter: Kirchgaesser, Johannes, Dipl.-Ing.

(56) Entgegenhaltungen:
- US-A- 2 500 377
- US-A- 2 526 532
- US-A- 2 868 489
- US-A- 2 904 864
- US-A- 2 915 272

## Beschreibung

Die Erfindung bezieht sich auf eine Halteklammer zur Befestigung von Bauteilen an Trägerplatten, insbesondere zur Befestigung von Verkleidungselementen am Karosserieblech von Kraftfahrzeugen. Die Erfindung geht hierbei aus von dem im Oberbegriff des Anspruchs 1 angegebenen Stand der Technik, welcher beispielsweise durch US-A 2.500.377 bekannt ist.

Diese bekannten Klammern dienen zur Halterung von Schutz- oder Zierleisten bei Kraftfahrzeugen und lassen sich mit der geteilten Befestigungshülse problemlos in den Befestigungslöchern der Karosserie bzw. der Außentüren verankern. Bei diesen Klammern wird es jedoch als Nachteil angesehen, daß sich diese nur demontieren lassen, indem die Befestigungshülse von der Rückseite der Trägerplatte zusammengedrückt wird, so daß die Befestigungshaken ungehindert wieder durch das Loch nach außen treten können. Hierzu ist es meistens erforderlich, vorher irgendwelche Verkleidungsplatten im Inneren des Fahrzeugs zu lösen, um an die Hülsen zu gelangen. Will man diese Klammer an Stellen verwenden, wo man nicht von rückwärts an die durchgesteckte Befestigungshülse herankommt, dann bleibt nur eine völlige Zerstörung der Klammer, wobei erfahrungsgemäß dann auch der Rand des Befestigungsloches in Mitleidenschaft gezogen wird und im ungünstigen Fall sogar unbrauchbar wird.

Aufgabe der Erfindung ist es daher, die Befestigungshülse der vorerwähnten Halteklammer so zu gestalten, daß eine spätere Demontage von der Montageseite her möglich ist, ohne den Rand des Befestigungsloches zu beschädigen.

Diese Aufgabe wird gemäß den Merkmalen des Anspruchs 1 dadurch gelöst, daß an den die Haken oder Nasen tragenden Hülsenwandteilen unmittelbar neben den Haken Demontagelappen angesetzt sind, welche bei im Befestigungsloch eingerasteter Befestigungshülse über den Rand des Befestigungsloches hinausragen, wobei die auf der Trägerplatte aufliegende Stützplatte der Halteklammer im Bereich um die Demontagelappen eine Aussparung aufweist.

Durch diese relativ einfachen baulichen Maßnahmen ist es nunmehr möglich, die Halteklammer nach Entfernen der Verkleidungselemente durch Zusammendrücken der Demontagelappen mittels eines einfachen Werkzeugs wie einer Flach- oder Schnabelzange zu lösen. Die aufgrund der Stützlappen mit einer gewissen Vorspannung eingerasteten Haken oder Nasen werden dabei soweit nach innen gedrückt, daß die Befestigungshülse leicht freigeht.

Um dem Klemmlappen eine optimale Klemmkraft zu verleihen, wird weiterhin vorgeschlagen, die Haken und Demontagelappen an den äußeren Bereichen einer einzigen Hülsenwandhälfte vorzusehen und diese Hülsenwandhälfte dann in Richtung auf die Klemmlappen der Halteklammer anzuordnen. In diesem Fall ist es nach einem weiteren Merkmal der Erfindung zweckmäßig, wenn diese Hülsenwandhälfte mit der Stützplatte über einen abgewinkelten Federsteg verbunden ist, welcher bis dicht unterhalb des Hakenfreischnitts heruntergezogen ist.

In der Zeichnung sind zwei Ausführungsbeispiele der Erfindung dargestellt und sollen nachfolgend näher erläutert werden.

Es zeigt
- Fig. 1: eine Ausführungsform der Halteklammer mit erfindungsgemäß ausgebildeter Befestigungshülse in Unteransicht,
- Fig. 2: die gleiche Halteklammer in Seitenansicht,
- Fig. 3: eine Teilansicht der Befestigungshülse in Richtung "Z",
- Fig. 4: die Halteklammer im eingebauten Zustand,
- Fig. 5: die Halteklammer während des Einbaus mittels eines Werkzeugs in Seitenansicht,
- Fig. 6: die Halteklammer beim Ausbau mittels einer Zange in Seitenansicht,
- Fig. 7: die Halteklammer beim Ausbau in Draufsicht und
- Fig. 8: eine andere Halteklammer im eingebauten Zustand.

Die in den Figuren dargestellten Halteklammern dienen ganz allgemein zur Befestigung von Bauteilen an Trägerplatten und werden im vorliegenden Fall verwendet zur Befestigung von Verkleidungselementen an Karosserieblechen von Kraftfahrzeugen.

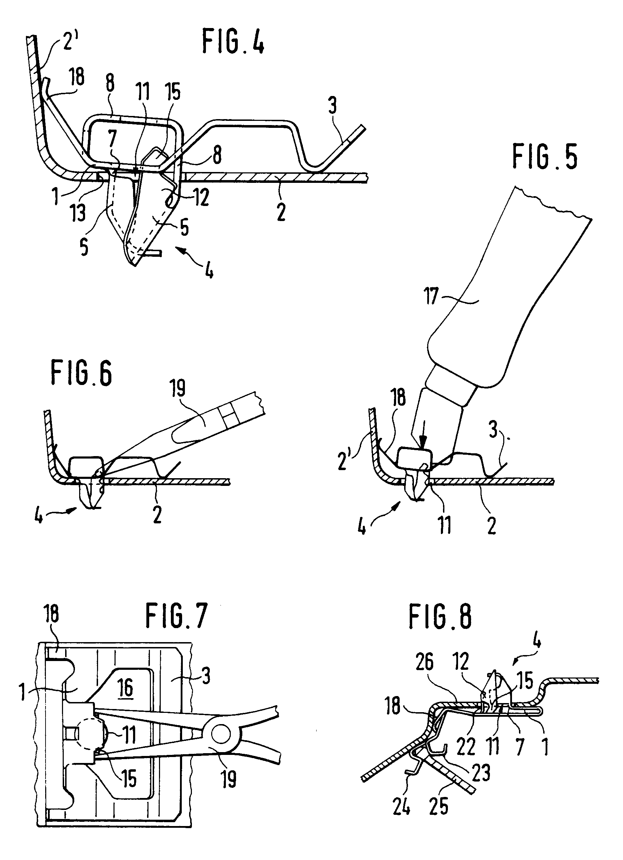

Die Halteklammer besteht hierbei aus einer Stützplatte 1 zur Auflage auf der Trägerplatte 2 und einem Klemmlappen 3, welcher ebenfalls auf der Trägerplatte 2 aufliegt und zum Festklemmen eines nicht dargestellten Bauteils wie zum Beispiel einer Verkleidungsplatte oder einer Zierleiste dient (Fig. 4).

An der Unterseite der Stützplatte 1 ist eine nach unten abstehende Befestigungshülse 4 vorgesehen, welche aus zwei Hülsenwandhälften 5 und 6 gebildet ist. Hierbei ist die eine Hülsenwandhälfte 5 über einen nach unten abgewinkelten Steg 7 direkt mit der Stützplatte 1 verbunden, während die andere Hülsenwandhälfte 6 mit der Stützplatte 1 über einen den Bereich der Befestigungshülse 4 überbrückenden, mehrfach abgewinkelten Steg 8 sozusagen "auf Umwegen" verbunden ist. Diese beiden Hülsenwandhälften 5 und 6 sind aus der zur Formung der Klammer verwendeten Blechplatine herausgestanzt und dann in eine etwa geschlossene Hülsenform gebogen, wobei die einander gegenüberliegenden Hülsen-Wandteile 9 und 10 nach unten spitz zusammenlaufen.

Am unteren Wandteil 9 ist ein kurzer Lappen 20 angeformt, welcher in einen entsprechend breiten Ausschnitt 21 am unteren Ende des gegenüberliegenden Wandteils 10 eintaucht, so daß die beiden Hülsenwandhälften 5 und 6 einerseits zueinander zentriert sind und sich andererseits federnd aufeinanderzubewegen können. An einer der beiden Hülsenwandhälften 6 sind ferner beiderseits des Verbindungssteges 8 zwei unter dem Niveau der Stützplatte 1 nach außen abstehende, federnd zusammendrückbare Haken oder Nasen 12 angeformt, welche den Rand 13 des Befestigungsloches 11 im eingedrückten Zustand der Hülse 4 hintergreifen.

Unmittelbar neben den Haken oder Nasen 12 sind an den äußeren Bereichen der Hülsenwandhälfte 6 Demontagelappen 15 angesetzt, welche über den Rand 13 des Loches 11 hinausragen, wenn die Haken oder Nasen 12 unter dem Rand 13 eingerastet sind. Dies setzt voraus, daß die Stützplatte 1 im Bereich um die Demontagelappen 15 eine Aussparung 16 aufweist.

Figur 5 zeigt die Halteklammer während des Einbaus, wobei die Befestigungshülse 4 zur Erleichterung des Einbaus mit einem kleinen Handwerkzeug 17 in das Loch 11 der Trägerplatte 2 eingedrückt werden kann. Die Halteklammer ist hierbei im dargestellten Ausführungsbeispiel auf der gegenüberliegenden Seite der Klemmlappen 3 mit zwei Stützlappen 18 an der abgewinkelten Seitenwand 2' der Trägerplatte 2 federnd abgestützt und dadurch in ihrer vorgesehenen Einbaulage festgelegt.

Zum Ausbau der Halteklammer werden, wie in den Figuren 6 und 7 dargestellt, die aus dem Befestigungsloch 11 herausragenden Demontagelappen 15 mittels einer Flach- oder Schnabelzange 19 so weit zusammengedrückt, bis die Haken oder Nasen 15 vom Rand 13 des Befestigungsloches 11 freigehen und die Befestigungshülse 4 aus dem Loch 11 herausgezogen werden kann. Die Aussparung 16 ist hierbei so groß gewählt, daß die Flachzange 19 sehr flach von der Seite angesetzt werden kann und die Demontagelappen 15 sich dabei gut ergreifen lassen.

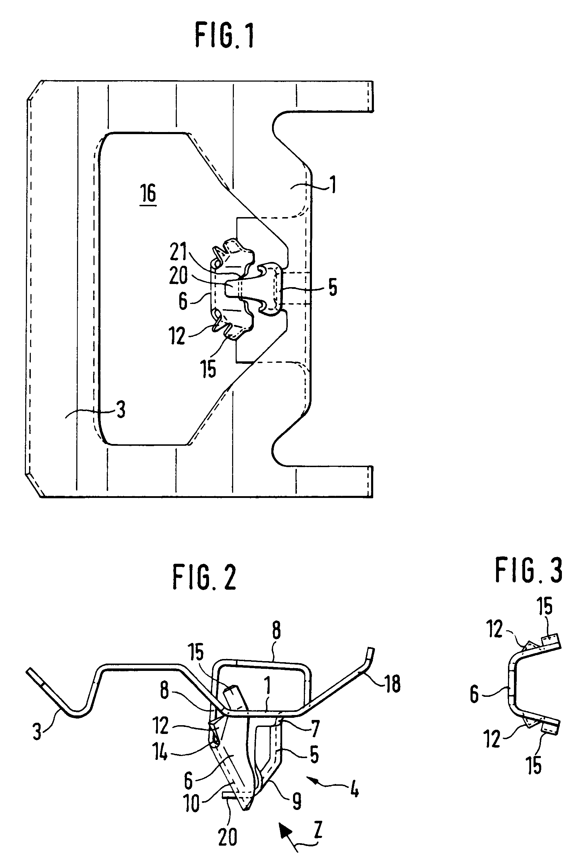

Die erfindungsgemäße Anordnung der Demontagelappen 15 ist nicht auf die in den Figuren 1 bis 7 gezeigte Ausbildung der Befestigungshülse 4 beschränkt, sondern, wie aus Fig. 8 ersichtlich, auch bei solchen geteilten Befestigungshülsen anwendbar, bei denen die aus der Aussparung 16 herausgestanzten Hülsenwandhälften 5 und 6 über einfach abgeknickte Stege 7 und 22 zueinander hin gebogen sind.

Diese Halteklammer wird im Dachbereich eines Kraftfahrzeugs eingesetzt und besitzt zwei Klemmlappen 23 und 24, in welche der Haltesteg 25 einer nicht dargestellten Seitenverkleidung eingesteckt ist. Die Befestigungshülse 4 dieser Halteklammer ist in gleicher Weise in einem Loch 11 der Trägerplatte 26 im Dachbereich verankert wie beim vorgenannten Ausführungsbeispiel und kann auch in gleicher Weise mit einer Flachzange wieder aus der Verankerung gelöst werden.

## Patentansprüche

1. Halteklammer zur Befestigung von Bauteilen an Trägerplatten, bei der die aus Stützplatte (1) und Klemmlappen (3) bestehende Halteklammer mit einer in einem Loch der Trägerplatte (2) verankerbaren Befestigungshülse (4) versehen ist, welche aus zwei Hülsenwandhälften (5,6) gebildet ist, die aus der zur Formung der Klammer verwendeten Blechplatine herausgestanzt und dann in die geschlossene Hülsenform gebogen sind, wobei an einer der beiden Hülsenwänden zwei nach außen abstehende, federnd zusammendrückbare Haken oder Nasen (12) angeformt sind, welche den Rand des Befestigungsloches (11) im eingedrückten Zustand der Hülse (4) hintergreifen,
**dadurch gekennzeichnet,** daß an dem die Haken oder Nasen (12) tragenden Hülsenwandteil (6) unmittelbar neben den Haken (12) Demontagelappen (15) angesetzt sind, welche bei im Befestigungsloch (11) eingerasteter Befestigungshülse (4) über den Rand (13) des Befestigungsloches (11) hinausragen, wobei die auf der Trägerplatte (2) aufliegende Stützplatte (1) im Bereich um die Demontagelappen (15) eine Aussparung (16) aufweist.

2. Halteklammer nach Anspruch 1, dadurch gekennzeichnet, daß die Haken (12) und Lappen (15) an dem oberen Rand einer einzigen Hülsenwandhälfte (6) vorgesehen und diese in Richtung auf den Klemmlappen (3) der Halteklammer angeordnet sind.

3. Halteklammer nach Anspruch 2, dadurch gekennzeichnet, daß diese Hülsenwandhälfte (6) mit der Stützplatte (1) über einen mehrfach abgewinkelten Federsteg (8) verbunden ist, welcher bis dicht unterhalb des Hakenfreischnittes (14) heruntergezogen ist.

## Claims

1. A retaining clip for fixing components to carrier plates, in which the retaining clip which comprises a support plate (1) and clamping lugs (3) is provided with a fixing sleeve (4) which can be anchored in a hole in the carrier plate (2) and which is formed from two sleeve wall halves (5, 6) which are stamped out of the sheet metal plate used for forming the clip and then bent into the closed sleeve shape, wherein formed on one of the two sleeve walls are two outwardly projecting, resiliently compressible hooks or noses (12) which engage behind the edge of the fixing hole (11) in the condition of the sleeve (4) in which it is pressed in, characterised in that provided on the sleeve wall portion (6) carrying the hooks or noses (12) immediately beside the hooks (12) are dismantling lugs (15) which, when the fixing sleeve (4) is engaged in the fixing hole (11), project beyond the edge (13) of the fixing hole (11), wherein the support plate (1) which bears on the carrier plate (2) has an opening (16) in the region around the dismantling lugs (15).

2. A retaining clip according to claim 1 characterised in that the hooks (12) and lugs (15) are provided at the upper edge of a single sleeve wall half (6) and they are arranged in a direction towards the clamping lugs (3) of the retaining clip.

3. A retaining clip according to claim 2 characterised in that said sleeve wall half (6) is connected to the support plate (1) by way of a multiply angled spring limb portion (8) which is extended downwardly to closely beneath the hook cut-out (14).

## Revendications

1. Agrafe de retenue pour la fixation d'éléments de construction sur des plaques support, dans laquelle l'agrafe de retenue se composant de la plaque d'appui (1) et des pattes de serrage (3) est munie d'une douille de fixation (4) que l'on emmanche dans un trou ménagé à cet effet dans la plaque support (2), douille qui se compose de deux demi-coquilles (5 et 6) qui sont réalisées par découpage à la presse dans le flan en tôle utilisé pour le formage de l'agrafe et auxquelles on confère ensuite par pliage la forme fermée d'une douille, les deux parois de cette douille étant en l'occurrence munies de deux crochets ou ergots (12) solidaires de celles-ci par formage, faisant saillie vers l'extérieur et élastiquement compressibles qui, lorsque la douille (4) est emmanchée en position, viennent cramponner par derriére le bord du trou de fixation (11), **se caractérisant par le fait** que la partie de la douille (6) portant les crochets ou les ergots (12) comporte des languettes de démontage (15) disposées directement en regard des crochets (12) qui, lorsque la douille (4) est emmanchée dans le trou de fixation (11) débordent au-dessus du rebord (13) dudit trou de fixation (11), la plaque d'appui (1) reposant sur la plaque support (2) comportant en l'occurence un évidement (16) dans la zone des languettes de démontage (15).

2. Agrafe de retenue suivant la revendication 1, se caractérisant par le fait que les crochets (12) et les languettes (15) sont prévus à la partie supérieure d'une seule demi-coquille de la douille (6) et sont orientés dans la direction des pattes de serrage (3) de l'agrafe de retenue.

3. Agrafe de retenue suivant la revendication 2, se caractérisant par le fait que cette demi-coquille (6) est reliée à la plaque support (1) par l'intermédiaire d'une barrette entretoise à pliages multiples, qui descend jusque tout contre la partie inférieure du dégagement du crochet (14).
